# EUROPEAN PATENT SPECIFICATION

(11) **EP 0 652 256 B1**
(45) Date of publication and mention of the grant of the patent: **06.05.1999**
(21) Application number: 94117370.0
(22) Date of filing: 03.11.1994
(51) Int. Cl.: C08L 83/07, C08K 9/10, C08L 83/04

(54) **Silicon rubber composition**
Silikonkautschukzusammensetzung
Composition de caoutchouc de silicone

(30) Priority: 04.11.1993 JP 298920/93
(43) Date of publication of application: 10.05.1995
(73) Proprietor: Dow Corning Toray Silicone Company, Limited, Tokyo 103 (JP)
(72) Inventor: Fuchigami, Hiroshi, Dow Corning Toray Silicone, Ichihara-shi, Chiba Prefecture (JP); Togashi, Atsushi, Dow Corning Toray Silicone, Ichihara-shi, Chiba Prefecture (JP)
(74) Representative: Spott, Gottfried, Dr.

(56) References cited:
- EP-A- 0 458 336
- EP-A- 0 459 464
- US-A- 4 250 075
- US-A- 5 240 984
- US-A- 5 254 656
- US-E- R E33 749

## Description

This invention is a thermosetting silicone rubber composition suitable for pressurized molding applications such as press molding, transfer molding, and injection molding, and also in extrusion molding.

In these molding methods, organic peroxide is used as the curing promoter for silicone rubber compositions of the millable type. While these compositions have excellent storage stability and a long working time which makes handling easier, they exhibit poor mold-releasing behavior when subjected to pressurized molding. This causes problems of rubber tears at the release stage, and metal mold contamination by undervulcanization (caused by vulcanization impediment by oxygen in air) of burrs of the moldings. Also, in extrusion molding, there has been a problem of surface adhesion caused by vulcanization impediment on the molding surface, and a dusting agent such as talc is often required. To solve these problems, a method has been proposed to add metal salts of a fatty acid, such as calcium stearate, zinc stearate, and the like, as an internal mold-releasing agent. However, it has not provided a solution to problems such as the undervulcanization of burrs of moldings.

Silicone rubber compositions which cure by addition reaction with a platinum catalyst have been developed recently and are also used in a wide range of applications.

Addition reaction silicone rubber compositions are mainly injection molded since they are in a liquid state, and this makes it possible to lower molding temperatures (130°C-150°C), shorten curing times (0.5 minutes-2 minutes), and eliminate curing impediments. However, the addition reaction between the reactants comprising a vinyl group-containing diorganopolysiloxane and an organohydrogenpolysiloxane starts at room temperature when the curing promoter catalyst is added. As curing proceeds, its usable time is extremely shortened, and it is absolutely impossible to package it in a single container.

Consequently, addition reaction silicone rubber compositions cannot be readily used as a pressure molding composition. One has to adopt a method in which the composition containing the organohydrogenpolysiloxane and the curing promoter catalyst are isolated in separate containers. Just prior to pressure molding, the contained ingredients are mixed and the mixture is immediately pressure molded. This has been a disadvantage because such handling is troublesome.

A method has been proposed to use a fine particle catalyst, consisting of platinum and a phenyl group-containing silicone resin, as the catalyst for addition reaction silicone rubber compositions. However, this catalyst is easily dissolved in a phenyl group-containing diorganopolysiloxane oil of a low degree of polymerization. Therefore, there has even been a problem of lack of effect when used as a moldability improvement agent and a lubricant.

In order to solve the above problems, we have made intensive studies, and have found that when one uses a particular type of organohydrogenpolysiloxane and an addition reaction catalyst consisting of platinum catalyst and a non-silicone thermoplastic resin the above problems can be solved.

The silicone rubber composition of this invention comprising constituents (A) - (E) has the advantages that the usable time before molding is long, the mold-releasing characteristics are good, and because there are no burrs from undervulcanization, there is no mold contamination. Further, the range of moldable temperatures is extremely wide, and a molded silicone rubber product is formed with excellent lubricity.

The present invention provides a silicone rubber composition which has excellent storage stability, has a long usable time before molding, has good mold-releasing characteristics without mold contamination, has a wide range of moldable temperatures, and makes silicone rubber moldings of excellent lubricity.

This objective is achieved by a silicone rubber composition comprising:
(A) 100 weight parts diorganopolysiloxane gum which contains at least 2 alkenyl groups bonded to silicon atoms in each molecule,
(B) 10-100 weight parts reinforcing filler,
(C) 0.1-10 weight parts organohydrogenpolysiloxane which contains at least 2 hydrogen atoms bonded to silicon atoms in each molecule,
(D) 1-30 weight parts phenyl group-containing diorganopolysiloxane with a viscosity of 1-1000mm²/s (centistoke) at 25°C, and
(E) an addition reaction catalyst which consists of a platinum catalyst and a non-silicone thermoplastic resin having a glass transition point (Tg) in the temperature range of 50-200°C and a particle size of 0.01-20 µm, where the amount of the platinum catalyst is 0.01-5 weight percent as platinum metal.

Diorganopolysiloxane gum, the constituent (A) of our invention, is the major constituent and should have at least 2 alkenyl groups bonded to silicon atoms in each molecule. This alkenyl group can be vinyl, allyl, or hexenyl. The organic groups bonded to silicon atoms other than alkenyl groups are monovalent hydrocarbons illustrated by alkyl groups such as methyl, ethyl, propyl, and butyl, or the substituted hydrocarbon groups such as 3,3,3-trifluoropropyl. The molecular structure of (A) can be straight chain or branched chain. Also, the degree of polymerization is within the range of that recognized for organopolysiloxane gums. Usually, this will be those with a viscosity higher than 10⁷ mm²/s (centistokes) at 25°C and a number average molecular weight greater than 25 × 10⁴, preferably greater than 40 × 10⁴.

The reinforcing filler, the constituent (B), can be those used in silicone rubbers, and a representative example is fine powder silica. Preferred silicas are fumed silica and precipitated silica. Among these, the most preferred is an ultra fine particulate silica of particle size below 50 nm and specific surface area greater than 100 m²/g. Also the reinforcing filler can be a surface-treated silica, which has been treated with organosilane, organosilazane, or the like. Organohydrogenpolysiloxane, the constituent (C), is the crosslinking agent of the diorganopolysiloxane of constituent (A). It should have at least 2 silicon bonded hydrogen atoms in each molecule for the composition to form a network structure. Other than hydrogen atoms, the organic groups bonded to silicon atoms can be the same ones illustrated above for the organopolysiloxane of constituent (A). Either a single kind of such organic groups can exist in a molecule, or two or more can coexist. The molecular structure of this organohydrogenpolysiloxane can contain straight chain, network structure, or 3-dimensional structure, and either a single polymer or mixture of two or more polymers can be used. The degree of polymerization of this organohydrogenpolysiloxane is usually in a viscosity range of 0.5-50,000 mm²/s (centistoke) at 25°C, and more preferably in range of 1-10,000 mm²/s (centistoke) are used. The compounding ratio of constituent (C) is in the range of 0.1-10 parts by weight per 100 parts by weight of constituent (A).

Phenyl group-containing diorganopolysiloxane, the constituent (D), is the constituent which adds moldability, lubricity, and the like, to the composition of our invention. The viscosity of constituent (D) at 25°C is in the range 1-1,000 mm²/s (centistoke), and preferably within 10-500 mm²/s (centistoke). When the viscosity is lower than 1 mm²/s (centistoke), the moldability of the silicone rubber composition is degraded. When it is higher than 1,000 mm²/s (centistoke), its oil bleeding nature is degraded, causing in the degradation of its lubricity. Such a phenyl group-containing diorganopolysiloxane can be methylphenylpolysiloxane end-stopped with trimethylsiloxy groups at both terminals; dimethylsiloxane-methylphenylsiloxane copolymer end-stopped with trimethylsiloxy groups at both terminals; dimethylsiloxane-diphenylsiloxane copolymer end-stopped with trimethysiloxy groups at both terminals; dimethylpolysiloxane end-stopped with dimethylphenylsiloxy groups at both terminals; and dimethylsiloxane-methylphenylsiloxane end-stopped with dimethylphenylsiloxy groups at both terminals.

The compounding ratio of constituent (D) is in the range of 1-30 weight parts per 100 weight parts of constituent (A), and preferably in the range 5-20 weight parts.

The addition reaction catalyst, the constituent (E), is the constituent which characterizes the present invention. It is a fine particle catalyst consisting of a non-silicone thermoplastic resin containing a platinum catalyst at 0.01-5 weight percent as metallic platinum atoms.

This platinum catalyst can be platinum fine powder, chloroplatinic acid, alcohol-modified chloroplatinic acid, a complex of platinum and diketone, a complex of chloroplatinic acid and the olefin family, a complex of chloroplatinic acid and an alkenylsiloxane, and can also be those supported by alumina, silica, and carbon black. Among these, the complex of chloroplatinic acid and an alkenylsiloxane is preferred since it has high catalytic activity as an addition reaction catalyst, and in particular, the complex of chloroplatinic acid and divinyltetramethylsiloxane, of JP-A 42-22924 is preferred. The non-silicone thermoplastic resin used in our invention should have a glass transition point (Tg) in the temperature range of 50-200°C. If Tg transition point is lower than 50°C, the storage stability of our invention is drastically degraded. If it is higher than 200°C, the temperature required for catalytic activity becomes too high for the catalyst to function. The preferred glass transition point of the non-silicone thermoplastic resin should be in a range of 70-150°C. Typical non-silicone thermoplastic resins are polycarbonate resin, polymethylmethacrylate resin, and polystyrene resin. Among these, polycarbonate resin is preferred.

Such a polycarbonate resin can have a basic structure expressed by the general formula -[OROC=O]ₙ- (where R is a hydrocarbon group). Among these, the polycarbonate resin in which R is an aromatic hydrocarbon group is preferred.

Such polycarbonate resins are represented by polycarbonate resin obtained from 2,2-bis(4-hydroxyphenyl)propane, carbonate resin obtained from 2,2-bis(4-hydroxyphenyl)butane, and polycarbonate resin obtained from 1,1-bis(4-hydroxyphenyl)isobutane.

The constituent (E) of the present invention consists of the above platinum catalyst and the above non-silicone thermoplastic resin. The content of this platinum catalyst is such that the amount of platinum is in the range of 0.01-5 weight percent as platinum metal. Also, to sufficiently manifest its catalytic activity and to maintain its dispersion stability when added to our silicone rubber composition, its average particle size is in the range of 0.1-20 µm. Although there is no specific limitation on its shape, it is preferred to be spherical.

This addition reaction catalyst can be manufactured, for example, by dissolving the platinum catalyst and the non-silicone thermoplastic resin in a low boiling point solvent, dripping it in an aqueous solution of a surfactant to form an oil/water type emulsion, removing the low boiling point solvent gradually to form solid fine particles, and collecting the solid fine particles produced from the aqueous solution.

Also, it can be manufactured by the method in which the platinum and non-silicone thermoplastic resin are dissolved in an organic solvent, and subsequently, this solution is sprayed into a hot gas flow to evaporate the solvent and to solidify the fine particles of the non-silicone thermoplastic resin containing the platinum catalyst. Among these methods, the latter is preferable.

The fine particles manufactured by these methods can be added as the catalyst as it is. A preferable method is to use it after the platinum catalyst on the surface of the fine particles has been washed off by use of a solvent which does not dissolve the non-silicone thermoplastic resin, but which will remove the addition reaction catalyst. The compounding amount of constituent (E) is usually in the range of 0.0000001-0.001 part by weight as platinum metal atoms, and preferably is in the range of 0.000001-0.001 part by weight, per 100 parts by weight of the organopolysiloxane of constituent (A).

Although our present invention is a silicone rubber composition consisting of the above constituents (A) - (E), other additives may be used. For example, diorganopolysiloxane ended with silanol groups at both terminals, organosilane, and organosilazane can be added as a crepe hardening inhibitor as needed. Also, a benzotriazole, acetylene compounds, and hydroperoxide compounds, which are known inhibitors of platinum catalysts, can be added if required. Further, the various additives which are known to be used in silicone rubber compositions, for example, inorganic filler, pigment, heat-resisting agent, and mold-releasing agent, can be added as long as the objective of the present invention is not impaired. These additives can be diatomaceous earth, quartz powder, calcium carbonate, titanium oxide, carbon black, and iron oxide red. The usual heat-resisting agent is rare earth oxides, cerium silanolate, cerium fatty acid salts. Finally, the mold-releasing agent is fatty acids, or their metal salts such as stearic acid, zinc stearate, and calcium stearate.

Our composition is manufactured by mixing the above constituents (A) - (E) uniformly. It is preferred to mix constituent (A) and the constituents (B) and (D) uniformly first, then to add the constituents (C) and (E).

The present invention has excellent storage stability, and upon molding, it has good mold-releasing characteristics without mold contamination, it has a wide range of moldable temperatures, and it is extremely useful as a silicone rubber composition for pressure molding such as transfer molding, injection molding, and the like.

In the following, the present invention is explained by Reference Examples, Examples, and Comparison Examples. In the examples, the term "parts" indicates parts by weight.

Reference Example 1. Preparation of a platinum vinylsiloxane complex composition. 6 g chloroplatinic acid aqueous solution (platinum content 33 wt %) and 16 g of 1,3-divinyltetramethyldisiloxane were dissolved in 35 g of isopropyl alcohol. 10 g of sodium hydrogencarbonate were added to this solution and the mixture stirred at 70-80°C for 30 minutes to react. After cooling, the solids were removed by filtering, and an isopropyl alcohol solution of platinum vinylsiloxane complex composition was obtained (platinum content 4.2 wt %).

Reference Example 2. Preparation of polycarbonate resin fine particle catalyst containing platinum catalyst. 500 g polycarbonate resin (Mitsubishi Gas Chemical Co., IUPILON™ H-3000, glass transition point 145-150°C), which was obtained from 2,2-bis(4-hydroxyphenyl)propane, were dissolved in 8.5 g dichloromethane, and further, 1.0 g toluene were added. 47.6 g of the platinum vinylsiloxane complex composition solution obtained in Reference Example 1 were added and mixed in this solution to obtain an uniform solution. Then the resultant solution was sprayed continuously into a spray drying chamber with a hot gas flow of nitrogen gas using a two fluid nozzle. The hot gas temperature was 100°C at the inlet and 70°C at the outlet, and the gas flow rate was 1.3 m³/minute. After 5.5 hours of operation, 420 g of fine particles were collected in the bag filter. The number average particle size of these fine particles was 1.5 µm, and their shape was spherical with some dents. Also, the platinum content of these fine particles was 0.4 wt %.

Reference Example 3. Preparation of acrylic resin fine particle catalyst containing platinum catalyst.

By the same procedure as Reference Example 2, except by replacing the polycarbonate resin with an acrylic resin (Mitsubishi Rayon Co., ACRYPET™ VH), a platinum catalyst-containing acrylic resin fine particle catalyst with the number average particle size of 1.4 µm and a platinum metal content of 0.4 wt % was obtained.

Reference Example 4. Preparation of silicone resin fine particle catalyst containing platinum catalyst.

By the same procedure as in Reference Example 2, except by replacing the polycarbonate resin with a silicone resin of average formula (C₆H₅SiO_{3/2})_{0.9}(Me₂SiO)_{0.1} and with a softening point of 145°C, a platinum catalyst-containing silicone resin fine particle catalyst with a number average particle size of 1.2 µm and platinum metal content of 0.4 wt % was obtained.

Example 1. Organopolysiloxane gum (degree of polymerization 5,000), consisting of 100 parts dimethylsiloxane unit (99.85 mole %) and methylvinylsiloxane unit (0.15 mole %), 7 parts dimethylsiloxane with silanol groups at both terminals and with a viscosity of 60 mm²/s (centistoke), 15 parts dry process silica with a specific surface area of 200 m²/g, 17 parts wet process silica with a specific surface area of 130 m²/g, and 10 parts dimethylsiloxane-methylphenylsiloxane copolymer (viscosity 350 mm²/s [centistoke]) of which the average molecular formula is expressed by Me₃SiO(Me₂SiO)₁₆(Ph₂SiO)₇SiMe₃ (where Me is methyl group, and Ph is phenyl group), were loaded in a kneader mixer and kneaded under elevated temperature until the mixture became uniform. Subsequently, to 100 parts of this mixture, 0.6 parts of dimethylsiloxane-methylhydrogensiloxane of which the average molecular formula is expressed by Me₃SiO(Me₂SiO)₃(MeHSiO)₅SiMe₃ and the viscosity at 25°C is 25 mm²/s (centistoke), and 0.06 part of the platinum catalyst-containing polycarbonate resin fine particle catalyst obtained in Reference Example 2, and 0.05 part 1-ethinyl-1-cyclohexanol as the platinum catalyst inhibitor were mixed to prepare silicone rubber composition 1 (SRC 1).

Subsequently, the curing characteristics, storage stability (usable time), molding characteristics, and physical properties of the silicone rubber composition were measured. For the curing characteristics, CURASTOMETER™ Model V (Orientec Corp.) was used and T₁₀ (time to which the torque reaches 10% of the final value) and T₉₀ (time to which the torque reaches 90% of the final value) were measured. T₁₀ can be regarded as the curing initiation time, and T₉₀ as the curing completion time. For the molding characteristics, injection molding was performed using a metal mold for calculator keypads. Also, JIS K6301 was followed for the physical properties. The results are shown in Tables 1 to 3.

Comparison Example 1. Silicone rubber composition 2 (SRC 2) was prepared by the same procedure as Example 1, except that 0.6 part of 2,5-dimethyl-2,5-di(t-butylperoxy)hexane (an organic peroxide) was used instead of platinum catalyst-containing polycarbonate fine particle catalyst and platinum catalyst inhibitor.

Subsequently, the curing characteristics, storage stability (usable time), molding characteristics, and physical properties of the silicone rubber composition were measured as described in Example 1. The results are shown in Tables 1 - 3.

Example 2. Silicone rubber composition 3 (SRC 3) was prepared by the same procedure as Example 1 except that 0.06 part of platinum catalyst-containing acrylic resin fine particle catalyst obtained in Reference Example 3 was used instead of platinum catalyst-containing polycarbonate fine particle catalyst and platinum catalyst inhibitor.

Subsequently, the curing characteristics, storage stability (usable time), molding characteristics, and physical properties of the silicone rubber composition were measured as described in example 1. The results are shown in Tables 1 to 3.

From these measurements, it was confirmed that SRC 1 of the present invention, to which platinum catalyst-containing polycarbonate fine particle catalyst was added, has very good moldability, and even after several hundred times of repeated molding, there was no mold contamination, no mold scorching, and storage stability was also good. Furthermore, we found that the curing rates are greatly different at temperatures below 150°C (longer times) than at temperatures above the 170°C (shorter times) for the compositions of our invention. Yet, it was confirmed that, even if the molding temperature is raised, scorching did not occur, and the range of moldable temperatures is wide. Contrastingly, the composition of the Comparison Example 1 showed poor curing in the area around burrs, and after several tens of times of repeated molding, pieces of burrs started to remain on the mold. Together with this mold contamination, the yield of the products also dropped drastically. SRC 3, the composition of Example 2, showed very good moldability at 160°C and even after several hundred times of repeated molding, mold contamination and scorching did not occur. However, when the molding temperature was 180°C, there were a number of occurrences of scorching, indicating the range of moldable temperature was too narrow.

**Table 1**

| Results of Curing Characteristics and Storage Stability Measurement (Unit : Second) | | | | | | |
|---|---|---|---|---|---|---|
| | Example 1 | | Example 2 | | Comparison Example 1 | |
| Temp. (°C) | T₁₀ | T₉₀ | T₁₀ | T₉₀ | T₁₀ | T₉₀ |
| 130 | 984 | 1410 | 642 | 984 | 1340 | 3366 |
| 150 | 18 | 312 | 106.8 | 154.2 | 204 | 684 |
| 170 | 37.2 | 62.4 | 33 | 53.4 | 48.6 | 165 |
| 180 | 23.4 | 39.6 | 22.8 | 34.8 | 30 | 95.4 |
| Usable Time *1 | 6 months | | 6 months | | 6 months | |

| | | | | | | |
|---|---|---|---|---|---|---|
| *1) Usable time : After holding silicone rubber compositions 1-3 at room temperature for a fixed time, 200 g each of these silicone rubber compositions were kneaded with 15.2cm (6 inch) twin rolls through a space 1 mm wide, and if it wrapped on the roll uniformly in 1 minute, it was judged to be usable. | | | | | | |

**Table 2**

| Results of Injection Molding Test | | | |
|---|---|---|---|
| | Example 1 | Example 2 | Comparison example 1 |
| Mold test 1 | | | |
| Vulcanization temperature (°C) | 150 | 150 | 150 |
| Vulcanization time (second) | 150 | 120 | 600 |
| Curing characteristic of burrs | Good | Good | No good |
| Mold-releasing characteristics | Good | Good | No good |
| Mold contamination | None | None | Notable |
| Scorching phenomenon | None | None | None |

| Mold test 2 | | | |
|---|---|---|---|
| Vulcanization temperature (°C) | 160 | 160 | 160 |
| Vulcanization time (second) | 40 | 40 | 300 |
| Curing characteristic of burrs | Good | Good | No good |
| Mold-releasing characteristics | Good | Good | No good |
| Mold contamination | None | None | Notable |
| Scorching phenomenon | None | None | None |

| Mold test 3 | | | |
|---|---|---|---|
| Vulcanization temperature (°C) | 180 | 180 | 180 |
| Vulcanization time (second) | 30 | 30 | 150 |
| Curing characteristic of burrs | Good | Good | No good |
| Mold-releasing characteristics | Good | Good | No good |
| Mold contamination | None | None | Notable |
| Scorching phenomenon | None | Notable | None |

**Table 3**

| Result of Physical Properties Measurement of Silicone Rubber^{*3}) | | | |
|---|---|---|---|
| | Example 1 | Example 2 | Comparison Example 1 |
| Hardness (JIS-A) | 27 | 26 | 28 |
| Tensile strength (Kgf/cm²) | 59 | 57 | 70 |
| Elongation (%) | 1091 | 1100 | 910 |
| Tear strength (Kgf/cm) (Type A) | 22 | 20 | 15 |

| | | | |
|---|---|---|---|
| *3) Measurement results of the silicone rubbers after heating 2 hours/200°C after press vulcanization 10 minutes/170°C. | | | |

Example 3. Silicone rubber composition (SRC 4) was prepared by the same procedure as Example 1 except that phenyl group-containing dimethylpolysiloxane, of which the average molecular formula is expressed by MePh₂SiO(Me₂SiO)₇SiMePh₂ (where Me is methyl group, and Ph is phenyl group), was used instead of dimethylsiloxane-methylphenylsiloxane copolymer.

Comparison Example 2. Silicone rubber composition (SRC 5) was prepared by the same procedure as Example 1 except that 0.06 part platinum catalyst-containing silicone resin fine particle catalyst was used instead of the platinum catalyst-containing polycarbonate resin fine particle catalyst.

The curing characteristics, storage stability (usable time), and moldability of these compositions were measured as described in Example 1. These results are shown in Table 4.

It was confirmed that SRC 4 of Example 3, in which the platinum catalyst-containing polycarbonate resin fine particle catalyst was added, had very good moldability, and even after several hundred of repeated moldings, there was no mold contamination, no scorching occurred, and also usable time and storage stability were good. SRC 5 of Comparison Example 3 showed good moldability, similar to that of SRC 4, immediately after its preparation. However, 4 days after preparation, its curing rate increased, and a number of scorching phenomena occurred upon molding. Therefore, it was confirmed that its usable time was extremely short.

**Table 4**

| Results of Curing Characteristics, Usable Time, and Press Molding Test | | |
|---|---|---|
| | Example 3 | Comparison Example 2 |
| Molding condition | | |
| Vulcanization temperature (°C) | 170 | 170 |
| Vulcanization time (minute) | 5 | 5 |
| Gauge pressure (Kgf/cm²) | 150 | 150 |

| Curing characteristics (170°C/10 min.) | | |
|---|---|---|
| Initial | | |
| T₉₀ (second) | 65 | 64 |
| T₁₀ (second) | 36 | 32 |
| 4th day | | |
| T₁₀ (second) | 38 | 12 |
| T₉₀ (second) | 65 | 25 |
| Usable time | 6 months | 3 days |

| Moldability | | |
|---|---|---|
| Initial | | |
| Hardness of burrs | Good | Good |
| Mold relaising characteristics | Good | Good |
| Scorching phenomena | None | None |
| 4th day | | |
| Hardness | Good | Good |
| Mold releasing characteristics | Good | Good |
| Scorching phenomena | None | Observed |

## Claims

1. A silicone rubber composition comprising:
(A) 100 weight parts of diorganopolysiloxane gum which contains at least 2 alkenyl groups bonded to silicon atoms in each molecule,
(B) 10-100 weight parts reinforcing filler
(C) 0.1 to 10 weight parts organohydrogenpolysiloxane which contains at least 2 hydrogen atoms bonded to silicon atoms in each molecule,
(D) 1-30 weight parts phenyl group-containing diorgano-polysiloxane having a viscosity of 1-1000 mm²/s (centistoke) at 25°C, and
(E) an addition reaction catalyst which consists of a platinum catalyst and a non-silicone thermoplastic resin having a glass transition point in the temperature range of 50-200°C and a particle size 0.01-20 µm, where the amount of the platinum catalyst is 0.01-5 weight percent as platinum metal.

2. The silicone rubber composition according to Claim 1, where the organic groups of the diorganopolysiloxane gum which are bonded to silicon atoms, other then the alkenyl groups, are methyl groups.

3. The silicone rubber composition according to Claim 2, where the alkenyl groups are vinyl.

4. The silicone rubber composition according to Claim 1, where the diorganopolysiloxane gum has a viscosity greater than 40 x 10⁴ mm²/s (centistoke) at 25°C.

5. The silicone rubber composition according to Claim 1, where the reinforcing filler has a particle size below 50 nm and a specific surface area greater than 100 m²/g.

6. The silicone rubber composition according to Claim 5, where the reinforcing filler is treated with a surface treatment agent selected from organosilane or organosilazane.

7. The silicone rubber composition according to Claim 1, where the organohydrogenpolysiloxane has a viscosity in a range of 1-10,000 mm²/s (centistoke) at 25°C.

8. The silicone rubber composition according to Claim 1, where the phenyl group-containing diorganopolysiloxane has a viscosity within a range of 10-500 mm²/s (centistoke) at 25°C.

9. The silicone rubber composition according to Claim 1, where the non-silicone thermoplastic resin is selected from a group consisting of polycarbonate resin, polymethylmethacrylate resin, and polystyrene resin.

10. The silicone rubber composition according to Claim 1, where the platinum catalyst comprises a complex of chloroplatinic acid and divinyltetramethylsiloxane, and the non-silicone thermoplastic resin is a polycarbonate resin having a glass transition point in the temperature of 70-150°C.

## Patentansprüche

1. Siliconkautschukzusammensetzung, die die folgenden Bestandteile umfaßt:
(A) 100 Gew.-Teile eines Diorganopolysiloxangummis mit mindestens 2 an Siliciumatome gebundenen Alkenylgruppen in jedem Molekül,
(B) 10-100 Gew.-Teile verstärkenden Füllstoff,
(C) 0,1 bis 10 Gew.-Teile eines Organohydrogenpolysiloxans mit mindestens 2 an Siliciumatome gebundenen Wasserstoffatomen in jedem Molekül,
(D) 1-30 Gew.-Teile eines phenylgruppenhaltigen Diorganopolysiloxans einer Viskosität von 1-1000 mm²/s (Centistoke) bei 25°C und
(E) einen Additionsreaktionskatalysator aus einem Platinkatalysator und einem thermoplastischen Nicht-Siliconharz mit einer Einfriertemperatur, die in einem Bereich von 50-200°C und einer Teilchengröße von 0,01-20 µm, wobei die Menge des Platinkatalysators 0,01-5 Gew.-% als Platinmetall beträgt.

2. Siliconkautschukzusammensetzung nach Anspruch 1, wobei die organischen Gruppen des Diorganopolysiloxangummis, die an Siliciumatome gebunden sind und von den Alkenylgruppen verschieden sind, Methylgruppen sind.

3. Siliconkautschukzusammensetzung nach Anspruch 2, wobei die Alkenylgruppen Vinylgruppen sind.

4. Siliconkautschukzusammensetzung nach Anspruch 1, wobei der Diorganopolysiloxangummi eine Viskosität von mehr als 40 x 10⁴ mm²/s (Centistoke) bei 25°C aufweist.

5. Siliconkautschukzusammensetzung nach Anspruch 1, wobei der verstärkende Füllstoff eine Teilchengröße unter 50 nm und eine spezifische Oberfläche von mehr als 100 m²/g aufweist.

6. Siliconkautschukzusammensetzung nach Anspruch 5, wobei der verstärkende Füllstoff mit einem aus Organosilan und Organosilazan ausgewählten Oberflächenbehandlungsmittel behandelt ist.

7. Siliconkautschukzusammensetzung nach Anspruch 1, wobei das Organohydrogmpolysiloxan eine Viskosität im Bereich von 1-10.000 mm²/s (Centistoke) bei 25°C aufweist.

8. Siliconkaumchukzusammensetzung nach Anspruch 1, wobei das phenylgruppenhaltige Diorganopolysiloxan eine Viskosität im Bereich von 10-500 mm²/s (Centistoke) bei 25°C aufweist.

9. Siliconkautschukzusammensetzung nach Anspruch 1, wobei das thermoplastische Nicht-Siliconharz aus Polycarbonatharz, Polymethylmethacrylatharz und Polystyrolharz ausgewählt ist.

10. Siliconkautschukzusammensetzung nach Anspruch 1, wobei der Platinkatalysator einen Komplex aus Chloroplatin(IV)-säure und Divinyltetramethylsiloxan umfaßt und das thermoplastische Nicht-Siliconharz ein Polycarbonatharz mit einer Einfriertemperatur im Bereich von 70-150°C ist.

## Revendications

1. Une composition de caoutchouc de silicone comprenant :
(A) 100 parties en poids d'une gomme de diorganopolysiloxane qui contient au moins 2 groupes alcényles liés à des atomes de silicium dans chaque molécule,
(B) 10 à 100 parties en poids d'une charge de renforcement,
(C) 0,1 à 10 parties en poids d'un organohydrogénopolysiloxane qui contient au moins 2 atomes d'hydrogène liés à des atomes de silicium dans chaque molécule,
(D) 1 à 30 parties en poids d'un diorganopolysiloxane contenant des groupes phényle, ayant une viscosité de 1 à 1000 mm²/s (centistoke) à 25°C, et
(E) un catalyseur de réaction d'addition qui consiste en un catalyseur au platine et une résine thermoplastique autre qu'une silicone, ayant une température de transition vitreuse comprise dans l'intervalle de température de 50 à 200°C et une taille de particules de 0,01 à 20 µm, la quantité du catalyseur au platine étant de 0,01 à 5 pour cent en poids exprimée en platine métallique.

2. La composition de caoutchouc de silicone selon la revendication 1, dans laquelle les groupes organiques de la gomme de diorganopolysiloxane, autres que les groupes alcényles, qui sont liés aux atomes de silicium sont des groupes méthyle.

3. La composition de caoutchouc de silicone selon la revendication 2, dans laquelle les groupes alcényles sont des groupes vinyle.

4. La composition de caoutchouc de silicone selon la revendication 1, dans laquelle la gomme de diorganosiloxane a une viscosité supérieure à 40 × 10⁴ mm²/s (centistoke) à 25°C.

5. La composition de caoutchouc de silicone selon la revendication 1, dans laquelle la charge de renforcement a une taille de particules inférieure à 50 nm et une surface spécifique supérieure à 100 m²/g.

6. La composition de caoutchouc de silicone selon la revendication 5, dans laquelle la charge de renforcement est traitée par un agent de traitement de surface choisi parmi un organosilane ou un organosilazane.

7. La composition de caoutchouc de silicone selon la revendication 1, dans laquelle l'organohydrogénopolysiloxane a une viscosité comprise dans l'intervalle de 1 à 10 000 mm²/s (centistoke) à 25°C.

8. La composition de caoutchouc de silicone selon la revendication 1, dans laquelle le diorganopolysiloxane contenant des groupes phényle a une viscosité comprise dans un intervalle de 10 à 500 mm²/s (centistoke) à 25°C.

9. La composition de caoutchouc de silicone selon la revendication 1, dans laquelle la résine thermoplastique autre qu'une silicone est choisie dans la classe formée par une résine de polycarbonate, une résine de polyméthacrylate de méthyle et une résine de polystyrène.

10. La composition de caoutchouc de silicone selon la revendication 1, dans laquelle le catalyseur au platine comprend un complexe d'acide chloroplatinique et de divinyltétraméthylsiloxane, et la résine thermoplastique autre qu'une silicone est une résine de polycarbonate ayant une température de transition vitreuse comprise entre 70 et 150°C.
